# DEMANDE DE BREVET EUROPEEN

(11) **EP 1 503 529 A1**
(43) Date de publication de la demande: **02.02.2005**
(21) Numéro de dépôt: 04364051.5
(22) Date de dépôt: 16.07.2004
(51) Int. Cl.: H04B 10/18, H04J 14/02

(54) **Système interférométrique de sélection de composantes spectrales de faisceau optique**

(30) Priorité: 30.07.2003 FR 0309412
(71) Demandeur: Optogone, 29280 Plouzané (FR); Get-Enst Bretagne, 29238 Brest Cedex 3 (FR)
(72) Inventeur: Defosse, Yves, 29217 Plougonvelin (FR); Barge, Michel, 29290 Milizac (FR); De Bougrenet de la Tocnaye, Jean-Louis, 29820 Guilers (FR); Battarel, Denis, 29217 Plougonvelin (FR); Wolffer, Nicole, 29280 Plouzane (FR)
(74) Mandataire: Vidon, Patrice

(57) **Abrégé**

L'invention concerne un système interférométrique (2) de sélection de composantes spectrales d'un faisceau optique incident en fonction de leur longueur d'onde, comprenant
- des moyens de transformation (42) du faisceau optique incident en deux faisceaux démultiplexés spatialement;
- des moyens de déphasage (43) d'au moins un des faisceaux démultiplexés spatialement, le déphasage s'appliquant spatialement de sorte à produire deux faisceaux dits déphasés, au moins une de leurs composantes étant déphasée en fonction de sa longueur d'onde;
- des moyens de recombinaison (44, 42) des faisceaux déphasés adaptés à produire un premier et un second faisceaux de sortie, chacun des faisceaux de sortie étant multiplexé en longueur d'onde et comprenant des composantes des faisceaux déphasés, sélectionnées en fonction respectivement d'un premier et d'un second déphasage.

## Description

La présente invention se rapporte au domaine de l'optique et plus précisément à la sélection de composantes spectrales de faisceau optique permettant un traitement du faisceau optique en fonction de longueurs d'onde ou de bandes spectrales particulières.

La sélection de longueur d'onde ou de bandes spectrales permet des applications très variées, notamment dans le domaine des télécommunications optiques (en particulier à hauts débits), par exemple, égalisation de gain et de canaux (ou atténuation) de spectre ou de bandes spectrales, extraction et/ou insertion de longueurs d'onde (OADM), commutation et routage optique. Elle permet également des applications dans le domaine de la spectroscopie.

### 1. Etat de l'art.

Différentes techniques optiques utilisant l'espace libre ont été proposées pour réaliser une sélection de composantes spectrales d'un faisceau optique. Selon l'état de l'art, un égaliseur dynamique de spectre utilise un démultiplexeur optique qui transforme le multiplex spectral en un multiplex spatial. Chaque longueur d'onde est ainsi séparée puis imagée sur un élément programmable (par exemple un modulateur spatial de lumière ou SLM de l'anglais « Spatial Light Modulator ») disposé dans un plan d'imagerie du plan d'entrée.

Selon l'état de l'art, cet élément programmable peut avoir différentes fonctions, notamment :
- une atténuation du faisceau optique (comme proposé dans le document de brevet EP1207418 déposé au nom de la société ALCATEL ® et ayant pour titre « égaliseur spatial dynamique basé sur un modulateur spatial de lumière » utilisant un cristal liquide de type PDLC (ou « Polymer Dispersed Liquid Crystal ») ;
- une modification de son amplitude complexe (élément diffractif ou holographique) ; ou bien
- une déviation de manière à modifier la fonction de couplage dans la fibre d'entrée.

Cette technique de déviation met en jeu différentes approches :
- par éléments diffractifs (comme décrits dans les documents de brevet WO 01/11419 de la société LIGHTCONNECT ® ou WO 98/06192 de l'université de Cambridge) ;
- par modification de la phase (comme illustré dans les documents de brevet WO 03/009054 et WO 02/071133 de la société XTELLUS ® intitulés respectivement « égaliseur de gain pour fibre optique » et « atténuateur optique pour fibre ») ; ou bien encore
- par déviation de faisceau (telle qu'indiquée dans le document de brevet US 6204946 de la société LUCENT TECHNOLOGIES ®).

Toutes ces techniques ont pour objectif de détériorer le bilan de couplage et ainsi d'agir sélectivement sur le spectre de longueurs d'onde, la fibre optique jouant ici le rôle de filtre spatial.

Une autre approche de l'état de la technique utilise le principe interférométrique (par exemple un interféromètre de Mach-Zehnder), le traitement spectral étant obtenu par mise en cascade d'interféromètres accordés sur une longueur d'onde fixe au moyen par exemple d'un réseau de Bragg, agissant comme autant de filtres spectraux (tels que mentionnés dans les documents de brevet US2003/0035616 (« multiplexeur add-drop avec une capacité d'amplification de signal »), US 6,424,763 (« filtre add-drop utilisant un tunnel résonant avec couplage sur le coté ») du MIT ® et JP2001109022 (« Multiplexeur optique add-drop avec une fonction de commutation ») de la société NTT ®.

La sélection de la longueur d'onde ou l'atténuation est obtenue par différentes techniques comme l'introduction d'un retard variable sur l'un des deux bras de l'interféromètre (tel qu'illustrée, par exemple, dans le document de brevet EP0783127 intitulé « coupleur interférométrique Mach-Zehnder à fibre optique monomode »).

Ces différentes techniques présentent l'inconvénient de mettre en oeuvre des réseaux de Bragg centrés sur des longueurs d'ondes fixes. Elles ne permettent donc pas une sélection continue des bandes ou des longueurs d'ondes.

En outre, ces techniques ont pour inconvénient de cascader les pertes, ce qui entraîne des pertes importantes notamment quand le guide est long.

De plus, ces techniques permettent de traiter un nombre de canaux relativement faible.

### 2. Présentation de l'invention

L'invention selon ses différents aspects a notamment pour objectif de pallier ces inconvénients de l'art antérieur.

Plus précisément, un objectif de l'invention est de fournir un système compact et robuste, de sélection de composantes spectrales d'un faisceau optique.

L'invention a également pour objectif de fournir un système de sélection optique relativement simple à mettre en oeuvre et facilement reconfigurable.

En outre, l'invention a pour objectif de permettre une sélection optique de composantes spectrales facile à contrôler de manière fiable.

De plus, l'invention a pour but de permettre une sélection qui permet une variation rapide de la ou des longueurs d'ondes sélectionnée, particulièrement bien adaptée aux applications de télécommunications à hauts débits (routage, égalisation, commutation notamment).

Ces objectifs ainsi que d'autres qui apparaîtront par la suite sont atteints selon l'invention, à l'aide d'un système interférométrique de sélection de composantes spectrales d'un faisceau optique incident en fonction de leur longueur d'onde, le système comprenant :
- des moyens de transformation du faisceau optique incident en deux faisceaux démultiplexés spatialement;
- des moyens de déphasage d'au moins un des faisceaux démultiplexés spatialement, le déphasage s'appliquant spatialement de sorte à produire deux faisceaux dits déphasés, au moins une de leurs composantes étant déphasée en fonction de sa longueur d'onde;
- des moyens de recombinaison des faisceaux déphasés adaptés à produire un premier et un second faisceaux de sortie, chacun des faisceaux de sortie étant multiplexé en longueur d'onde et comprenant des composantes des faisceaux déphasés, sélectionnées en fonction respectivement d'un premier et d'un second déphasage.

Ainsi, en fonction des déphasages propres à chacune des longueurs d'onde (ou bandes spectrales) des faisceaux déphasés, le premier et le second faisceau de sortie comprennent chacun (de manière complémentaire) tout ou partie des composantes spectrales du signal d'entrée. Le système permet donc de sélectionner une ou plusieurs composantes spectrales, certaines de ces composantes pouvant être notamment égalisées (cas par exemple, où on considère l'un des faisceaux de sortie, l'atténuation étant fonction du déphasage appliqué aux faisceaux déphasés), bloquée (l'atténuation étant maximale pour la longueur d'onde considérée), aiguillées vers l'une ou l'autre des fibres de sortie, ...

Selon une caractéristique particulière, le système est remarquable en ce que le premier déphasage est sensiblement égal à zéro modulo 2π radians, les composantes des faisceaux déphasés étant sensiblement en phase et en ce que le deuxième déphasage est sensiblement égal à π modulo 2π radians, les composantes des faisceaux déphasés étant sensiblement en opposition de phase.

Ainsi, on peut notamment bloquer une longueur d'onde ou une bande spectrale, ou la router en minimisant les pertes optiques, d'une manière relativement simple.

Selon une caractéristique particulière, le système est remarquable en ce que les moyens de transformation du faisceau optique incident comprennent des moyens d'imagerie et de démultiplexage spatial d'au moins un faisceau optique et des moyens de séparation.

Selon l'invention, les moyens de séparation agissent soit sur le faisceau incident, soit sur des faisceaux démultiplexés spatialement.

Selon une caractéristique particulière, le système est remarquable en ce que les moyens d'imagerie et de démultiplexage spatial sont placés sur le trajet optique compris entre les moyens de séparation et les moyens de déphasage.

Selon une caractéristique particulière, le système est remarquable en ce que les moyens de séparation sont placés sur le trajet optique compris entre les moyens d'imagerie et de démultiplexage spatial et les moyens de déphasage.

Selon une caractéristique particulière, le système est remarquable en ce que les moyens d'imagerie sont adaptés à une propagation d'un signal optique en espace libre.

Selon une caractéristique particulière, le système est remarquable en ce que les moyens d'imagerie comprennent au moins une première lentille possédant une première distance focale et une seconde lentille possédant une seconde distance focale, et en ce que :
- la première lentille est placée à la première distance focale de l'entrée des moyens d'imagerie, ;
- la seconde lentille est placée à la seconde distance focale de la sortie des moyens d'imagerie ; et
- les première et seconde lentilles sont séparées d'une distance correspondant à la somme des première et seconde distances focales.

Cette mise en oeuvre est compatible avec de nombreuses applications et permet notamment l'introduction d'un élément optique quelconque (par exemple démultiplexeur, filtre, ...) sur le trajet optique notamment dans le plan de Fourier des première et seconde lentilles (plan situé à une distance multiple des distances focales respectives des lentilles).

Selon une caractéristique particulière, le système est remarquable en ce que les moyens de démultiplexage spatial sont placés dans un plan de Fourier des première et seconde lentilles.

Selon une caractéristique particulière, le système est remarquable en ce que les moyens de transformation du faisceau optique incident comprennent un démultiplexeur guidé en optique planaire, adapté au démultiplexage d'au moins un faisceau optique, et des moyens de séparation.

Ainsi, le système est particulièrement robuste.

Selon une caractéristique particulière, le système est remarquable en ce que les moyens de déphasage sont placés dans un plan d'imagerie des moyens d'imagerie de sorte à permettre un déphasage en fonction de chacune des composantes multiplexées spatialement.

Selon une caractéristique particulière, le système est remarquable en ce que les moyens de déphasage comprennent des moyens de déphasage programmables.

De cette manière, il est possible de commander le déphasage en fonction de longueurs d'ondes ou de bandes spectrales déterminées.

Selon une caractéristique particulière, le système est remarquable en ce que les moyens de déphasage programmables sont adaptés à retarder de manière variable un faisceau optique et appartiennent au groupe comprenant :
- les miroirs déformables;
- les micro-miroirs ; et
- les matériaux optiques permettant une modulation de l'indice de réfraction.

Les moyens de déphasage peuvent notamment être réalisés simplement sous forme de barrette. Les matériaux optiques sont isotropes ou non et sont, par exemple, du nano-PDLC associé à des électrodes commandables.

Selon une caractéristique particulière, le système est remarquable en ce que les moyens de déphasage comprennent des moyens de déphasage non programmables.

Des moyens de déphasage fixes peuvent être ajoutés pour, notamment, compenser un chemin optique. Il s'agit, par exemple, de lignes à retard réalisées en espace libre ou à partir d'une fibre.

Selon une caractéristique particulière, le système est remarquable en ce que les moyens de déphasage sont associés à au moins un miroir.

Ainsi, le système est particulièrement simple à mettre en oeuvre, au moins une partie des moyens de transformation étant commune avec les moyens de combinaison, des moyens de séparation étant utilisés, par retour inverse, pour recombiner deux faisceaux.

Selon une caractéristique particulière, le système est remarquable en ce que les moyens de démultiplexage spatial appartiennent au groupe comprenant :
- les prismes ;
- les réseaux holographiques ; et
- les réseaux blazés.

Selon une caractéristique particulière, le système est remarquable en ce que les moyens de séparation comprennent une séparatrice.

Ainsi, les moyens de séparation sont mis en oeuvre sous forme de lame séparatrice ou de cube séparateur.

Selon une caractéristique particulière, le système est remarquable en ce que les moyens de séparation comprennent un coupleur.

Selon une caractéristique particulière, le système est remarquable en ce que les moyens de recombinaison et les moyens de transformation possèdent au moins une partie commune.

Cela permet notamment de simplifier le système et d'en diminuer le coût de fabrication.

Selon une caractéristique particulière, le système est remarquable en ce qu'il comprend des moyens appartenant au groupe comprenant :
- les moyens d'égalisation optique ;
- les bloqueurs de longueur d'onde ;
- les sélecteurs de bandes spectrales ; et
- les moyens de routage optique.

L'invention est, ainsi, particulièrement bien adaptée aux liens ou réseaux de communication, notamment à hauts débits.

Selon une caractéristique particulière, le système est remarquable en ce qu'il comprend des moyens de mesure de spectre optique du faisceau optique incident.

Le système permet ainsi des applications très variées, notamment dans le domaine de la spectroscopie ou encore des télécommunications (pour effectuer du « monitoring » sur des faisceaux optiques).

Selon une caractéristique particulière, le système est remarquable en ce qu'il forme un composant monolithique.

Cela permet notamment une grande simplicité d'utilisation et un système compact.

Selon une caractéristique particulière, le système est remarquable en ce que les moyens de transformation et les moyens de déphasage sont séparés.

Ainsi, il est possible de configurer facilement le système en fonction de différentes applications.

### 3. Liste des figures.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1a à 1c présentent schématiquement un égaliseur optique selon des modes de réalisation conformes avec l'invention ;
- la figure 2 illustre un bloc imageur multiplexeur/demultiplexeur mis en oeuvre dans l'égaliseur des figures 1a à 1c ;
- les figures 3a à 3c décrivent un bloc interférométrique (ou DRI) mis en oeuvre dans l'égaliseur de la figure 1a ;
- les figures 4a et 4c illustrent des éléments déphaseurs mis en oeuvre dans l'égaliseur des figures 1a à 1c;
- les figures 5a, 5b, 6a et 6b présentent des variantes de réalisation de l'égaliseur selon l'invention ;
- les figures 7a à 7d décrivent un DRI mis en oeuvre dans l'égaliseur des figures 1b et 1c ; et
- la figure 8 illustre un principe d'égaliseur basé sur un DRI tel qu'illustré en regard de la figure 3c.

### 4. Description détaillée de l'invention.

L'invention repose sur une solution, utilisant l'espace libre ou étant étendue à l'optique planaire. L'invention permet l'atténuation et/ou la sélection de longueurs d'onde ou de bandes spectrales sur le principe de la division-recombinaison interférométrique (DRI), appliqué de manière indépendante et en parallèle sur des longueurs d'onde issues d'un signal WDM, contrairement à l'état de la technique, où le même résultat s'obtient par 1a mise en cascade d'interféromètres plus complexe à mettre en oeuvre.

Plus précisément, la partie interférométrique est matérialisée selon l'invention par un bloc de séparation/recombinaison de deux faisceaux (DRI)( le coupleur à fibre ou le séparateur de faisceaux). Par le jeu d'interférences constructives ou destructives (espace libre), ou le couplage de modes (cas du guide), on peut moduler de manière quasi continue l'intensité et obtenir en particulier lors d'une opposition de phase de très bonnes extinctions sur la longueur d'onde ou bande spectrale sélectionnée. Ce système est donc compatible avec les spécifications courantes pour réaliser des sélecteurs dynamiques de bandes spectrales ou bloqueurs de longueurs d'onde nécessitant des réjections supérieures à 35 dB (correspondant au niveau du bruit des amplificateurs optiques : la partie du signal optique, atténuée ou bloquée par un DSE (de l'anglais « Dynamic Spectral Equalizer » ou « égaliseur spectral dynamique» en français) ne devant pas être amplifiée à nouveau en passant dans des amplificateurs optique.).

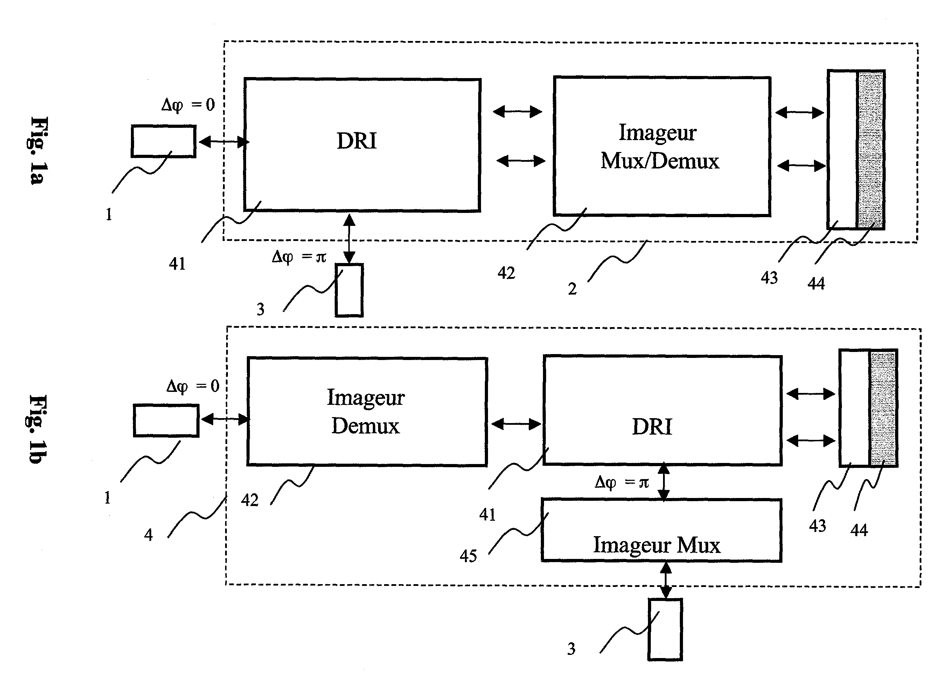

Selon l'invention, on propose un système d'égalisation comprenant trois blocs optiques indépendants :
- un bloc imageur multiplexeur/démultiplexeur 42 ;
- un élément déphaseur 43 associé à un miroir 44 ; et
- un bloc interférométrique 41 (DRI) disposé soit en entrée du bloc imageur 42 selon la figure 1a, soit intercalé entre le bloc imageur 42 et l'élément déphaseur 43 selon les figures 1b et 1c.

Plus précisément, les figures 1a, 1b et 1c illustrent respectivement des systèmes d'égalisation 2, 4 et 5, acceptant en entrée un signal optique transmis par une fibre optique 1 et délivrant en sortie un signal sur une fibre optique 3. Selon différentes variantes de l'invention, les fibres 1 et 3 comprennent ou non des moyens de collimation.

Selon la figure 1a, le signal d'entrée est d'abord séparé par le DRI 41 du système d'égalisation 2, en deux faisceaux optiques indépendants et cohérents servant d'entrée au bloc 42. Le bloc imageur 42 démultiplexe spatialement ces deux faisceaux optiques indépendants en fonction de leurs composantes spectrales pour être imagés latéralement sur l'élément déphaseur 43 avant d'être réfléchis par le miroir 44. Les faisceaux optiques réfléchis transitent alors par le bloc imageur 42 qui les recombinent spatialement en fonction de leurs déphasages (selon un principe interférométrique, le déphasage sur l'un des bras de l'interféromètre permettant d'annuler l'énergie en sortie) :
- vers la fibre de sortie 1 (pour les composantes des deux faisceaux, en phase (le déphasage Δϕ étant nul modulo 2π)); et/ou
- vers la fibre d'entrée 3 (pour les composantes des deux faisceaux, en opposition de phase (le déphasage Δϕ étant égal à π modulo 2π)).

Selon les figures 1b et 1c, le signal d'entrée est démultiplexé spatialement par le bloc imageur 42 qui crée une image du faisceau démultiplexé sur l'élément déphaseur 43. Le faisceau démultiplexé traverse le DRI 41 qui le transforme en deux faisceaux optiques indépendants (chacun étant associé à une image sur l'élément déphaseur 43). Les faisceaux déphasés sont alors réfléchis par le miroir 44. En fonction de leurs déphasages respectifs, les faisceaux se recombinent vers la fibre 2 et/ou vers la fibre 3.

Plus précisément, les faisceaux déphasés sont recombinés en fonction de la valeur du déphasage :
- vers la fibre d'entrée 1 via le bloc 42 (pour les composantes des deux faisceaux qui sont en phase (le déphasage Δϕ étant nul modulo 2π)); et/ou
- vers la fibre de sortie 3 (pour les composantes des deux faisceaux, en opposition de phase (le déphasage Δϕ étant égal à π modulo 2π)) via un bloc imageur multiplexeur 45 similaire au bloc 42 (cas illustré en regard de la figure 1b) ou via un miroir de renvoi 51 (accolé au DRI 41 avec un angle de 45° pour former un DRI 50) vers le bloc imageur 42 (cas illustré en regard de la figure 1c où l'écart entre les faisceaux d'entrée et de sortie permet de séparer les fibres d'entrée 1 et de sortie 3 qui sont légèrement décalées). Le système d'égalisation 5 présente l'avantage d'économiser un bloc imageur par rapport au système d'égalisation 4.

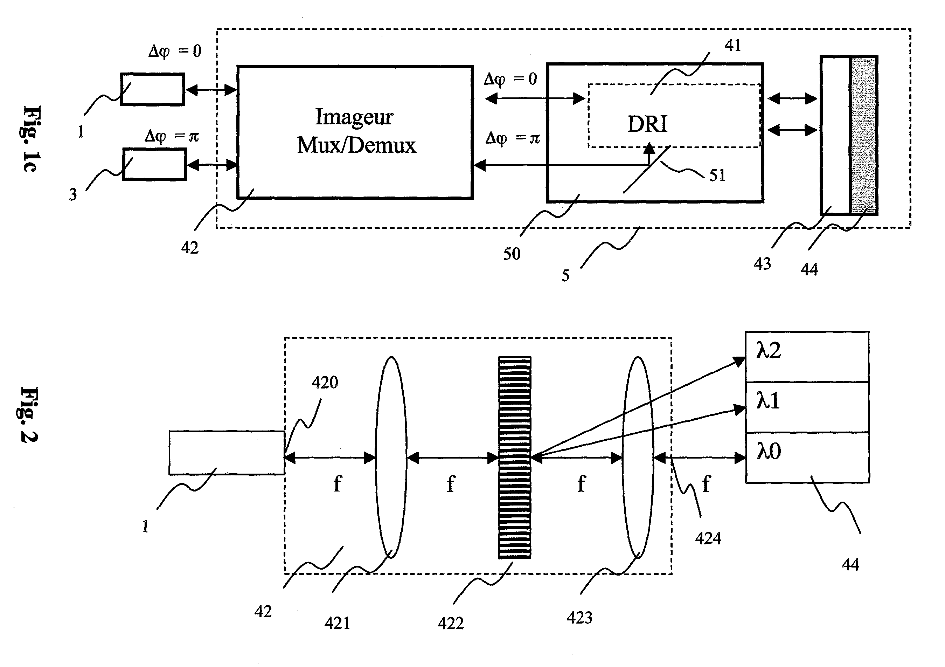

La figure 2 représente schématiquement le bloc imageur 42 réalisant le démultiplexage spatial d'un signal WDM issu de la fibre optique 1, et son principe de fonctionnement.

Le bloc imageur 42 représenté est un système d'imagerie en espace libre de type 4*f*, qui comprend les éléments suivants, placés successivement sur son axe optique qui est parallèle à la direction de propagation du faisceau incident :
- une première lentille 421 ;
- un élément dispersif 422, par exemple de type prisme ou réseau blazé, réseau holographique ou tout élément réalisant une dispersion du faisceau incident ;
- une seconde lentille 423.

Selon une variante, la lentille 421 est intégrée à une fibre d'entrée/sortie.

Le bloc imageur 42 représenté est un système d'imagerie en espace libre de type *4f,* où *f* représente la distance focale des lentilles 421 et 422 avec l'élément dispersif 422 placé dans le plan de filtrage du montage. La lentille 421 est placée à une distance *f* de l'entrée 420 (à laquelle est accolée la fibre 1) et de l'élément dispersif 422. Le signal d'entrée converge donc sur le bloc imageur 42.

La lentille 423 est également placée à une distance *f* de l'élément dispersif 422. Les systèmes d'égalisation 3 et 4 sont, par ailleurs, tels qu'une distance optique *f* sépare la lentille 423 du miroir 44 de sorte à produire une image réelle du signal ayant traversé l'élément dispersif 422, sur le miroir 44. Comme représenté symboliquement sur la figure 2, l'élément dispersif permet de séparer les différentes composantes associées chacune à une longueur d'onde λ*i* (démultiplexage spatial illustré dans le plan de dispersion), et une image du signal avec les différentes composantes du signal apparaît sur le miroir 44.

Selon une variante de l'invention, les lentilles 421 et 423 présentent des distances focales différentes, égales respectivement à *f1* et *f2*. La lentille 421 est alors placée à une distance *f1* de l'entrée 420 et de l'élément dispersif 422. La lentille 423 est placée à une distance *f2* de l'élément dispersif 422. Les systèmes d'égalisation 3 et 4 sont, par ailleurs, tels qu'une distance optique *f2* sépare la lentille 423 du miroir 44

Selon une autre variante de l'invention, le bloc imageur est de type AWG (de l'anglais « Array Wave Guide » ou « Réseaux de Guides d'ondes »). Un bloc imageur de type AWG correspond à une combinaison de phasars (lignes à retard sous forme de guides d'onde) de longueurs distinctes. Grâce aux longueurs différentes des phasars, le bloc comprend une région intermédiaire qui est le plan de Fourier entre les entrées/sorties avec une matrice intermédiaire de modulateurs actifs qui permet d'égaliser les voies. Il s'agit d'une solution optique planaire qui présente un coût fonction du nombre de canaux, plus élevé qu'une solution en espace libre. Les pertes d'insertion, les PDL (de l'anglais « Polarisation Dispersion Loss » ou pertes liées à la dispersion de polarisation) et les PDM (de l'anglais « polarisation Mode Dispersion » ou dispersion modale de polarisation) sont également plus élevées.

Le bloc interférométrique DRI 41 comprend au moins un élément permettant la séparation du faisceau optique, incident en deux faisceaux indépendants ainsi que leur recombinaison soit vers une entrée soit vers une sortie par retour inverse en fonction du retard généré entre les deux faisceaux dans le bloc modulateur spatial via le bloc imageur démultiplexeur. Le modulateur spatial comprend optionnellement un élément variable et commandable permettant soit de retarder soit de déphaser les chemins optiques entre les deux bras, et un miroir.

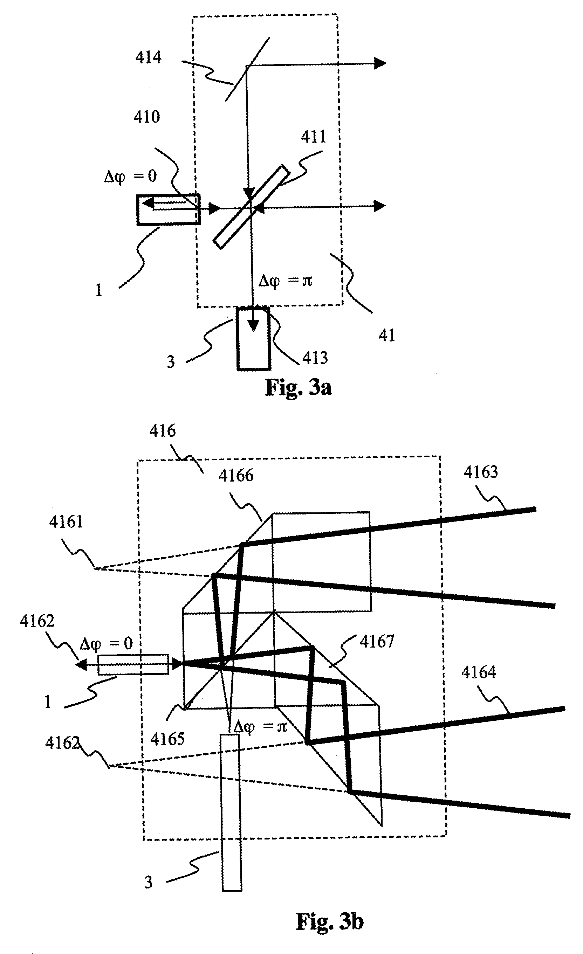

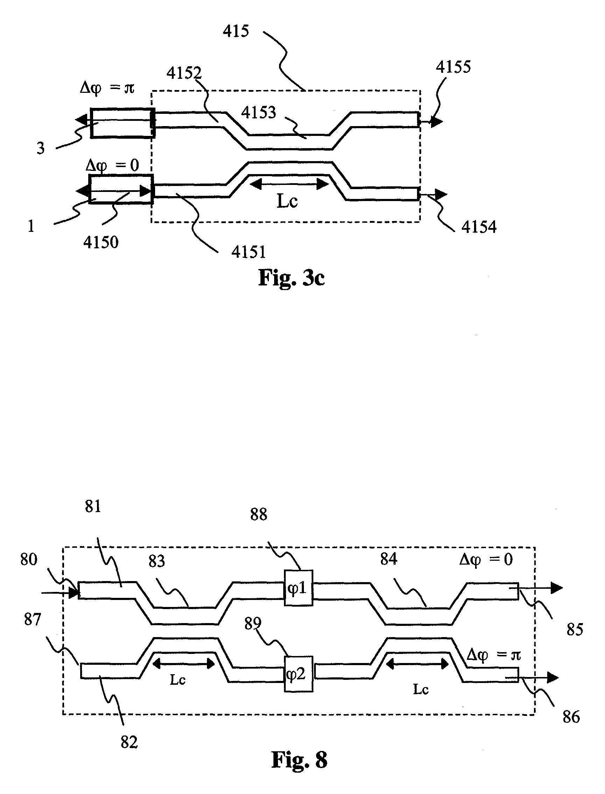

Les figures 3a à 3c représentent différentes variantes de réalisation du DRI 41 selon l'invention mise en oeuvre dans une configuration de l'égaliseur optique telle qu'illustrée en regard de la figure 1a. Deux options sont envisageables pour réaliser le bloc DRI : en espace libre (figures 3a et 3b) et guidée (fibre ou guide plan, selon l'exemple de la figure 3c).

Selon un mode de réalisation illustré en regard de la figure 3a, on met en oeuvre un DRI 41. Un faisceau optique incident pénètre dans le DRI 41 via une entrée 410 associée à la fibre 1, jusqu'à une séparatrice 411 qui le sépare, de manière équitable, en deux faisceaux. Un de ces faisceaux est réfléchi par un miroir 414 à 45° ou un prisme à réflexion totale de façon à disposer de deux faisceaux parallèles en entrée du bloc imageur 42.

Selon une variante de l'invention, ces faisceaux sont collimatés au moyen, par exemple, d'une optique de collimation couplée à la fibre 1.

Les deux faisceaux traversent le bloc imageur/démultiplexeur 42. Les composantes spectrales d'un des faisceaux (selon une configuration de type Michelson) ou des deux faisceaux (selon une configuration de type Mach-Zehnder) sont imagées latéralement sur les déphaseurs 43 et, donc, déphasées par les déphaseurs 43. Les deux faisceaux sont ensuite réfléchis par le miroir 44, retraversent le système imageur/multiplexeur 42 puis, par parcours inverse, se recombinent sur la lame 411 du DRI 41. Selon la nature du déphasage entre les deux faisceaux, on obtient une recombinaison sur la fibre 1 si le déphasage est nul et sur la fibre 3 si le déphasage est égal à π (ce qui est notamment utilisé pour des application de type bloqueurs de longueur d'onde, de sélecteur de bande spectrale ou de routage optique). Si le déphasage prend d'autres valeurs modulo 2π, la recombinaison se fait sur les deux fibres 1 et 3 suivant une proportion fonction du déphasage (permettant ainsi d'égaliser le faisceau incident).

La figure 3b illustre un DRI 416 comprenant une séparatrice 4165 et deux prismes 4166 et 4167 à réflexion totale. Un faisceau 4162 incident, issu de la fibre 1 est d'abord séparé en deux faisceaux par la lame séparatrice 4165. Chacun des faisceaux est ensuite réfléchi plusieurs fois sur l'un des prismes 4166 ou 4167. Ainsi, une fibre émule, dans ce montage, deux sources secondaires 4161 et 4162 virtuelles qui produisent respectivement en sortie deux faisceaux 4163 et 4164 parallèles. Après traitement par l'imageur 42, le déphaseur 43 et le miroir 44, similaire à celui décrit en regard de la figure 3a, le DRI accepte, par retour inverse, deux faisceaux dont les composantes spectrales sont déphasées. La lame séparatrice 4165 combine alors les deux faisceaux sur la fibre 1 et/ou sur la fibre 3 selon la valeur du déphasage associé à chaque composante spectrale.

Selon une autre variante de réalisation du DRI illustré en regard de la figure 3c et mis en oeuvre dans la configuration de l'égaliseur 2 décrit en regard de la figure 1a, on met en oeuvre une séparation du faisceau optique au moyen d'un coupleur 415 3dB (couplage par mode évanescent ou bien par fusion de guides ou fibres). Le signal est injecté dans le coupleur 415 par une entrée 4150 associée à la fibre 1, puis est guidé par un guide 4151 jusqu'à une zone de couplage 4153 de longueur Lc (4Lc étant la période de couplage ). Le signal est ainsi réparti de manière équitable entre deux entrées/sorties 4154 et 4155 : chacune des sorties 4154 et 4155 récupère donc environ 50% du signal incident. Les faisceaux sont ensuite imagés et démultiplixés par le bloc imageur 42 puis déphasés par le ou les déphaseurs 43 d'une manière similaire à celle décrite en regard de la figure 3a. Après réflexion et multiplexage, les deux faisceaux de sorties pénètrent dans le coupleur 415 via les entrées/sorties 4154 et 4155. Comme précédemment, selon la nature du déphasage entre les deux faisceaux, on obtient une recombinaison sur la fibre 1 si le déphasage est nul et sur la fibre 3 (associée à une sortie 4152) si le déphasage est égal à π.

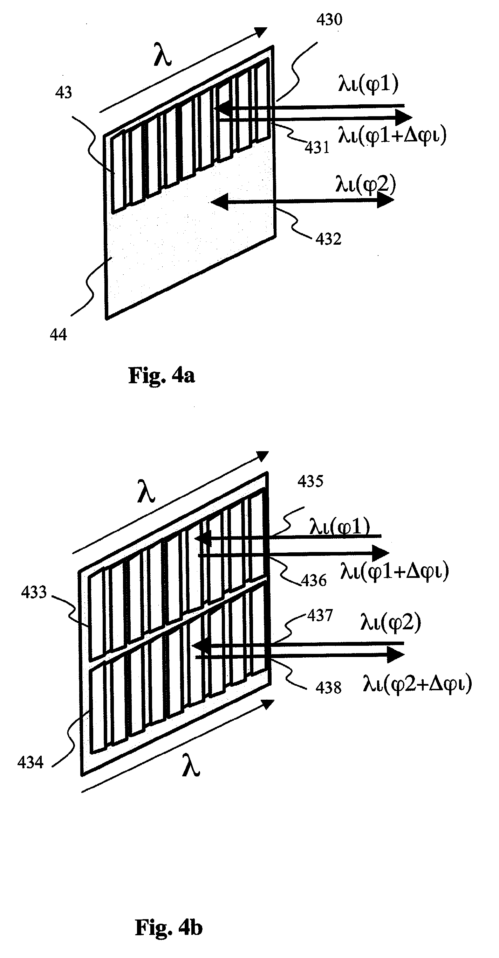

Compte tenu du dispositif de démultiplexage 420 utilisé, chaque longueur d'onde λ*i* est imagée latéralement sur un élément déphaseur indépendant et réfléchie comme indiqué sur les figures 4a et 4b.

Un élément programmable est placé sur au moins un des deux bras de l'interféromètre et permet, soit de retarder (déphasage), soit de rallonger les chemins optiques à souhait sur le ou les bras correspondant de manière à modifier les conditions de formation d'interférences entre deux faisceaux issus du bloc inter-férométrique et à sélectionner les sorties.

Selon l'invention, on module indépendamment les deux sorties du bloc DRI 41 imagées dans le plan du déphaseur (ou SLM de l'anglais « Spatial Light Modulator » ou « modulateur spatial de lumière » en français correspondant à une succession de déphaseurs indépendants formant une barrette comprenant plusieurs pixels), par le biais d'un retard variable. Ce retard variable est obtenu selon l'invention notamment par rallongement du chemin optique (par exemple en utilisant un SLM comprenant des micro-miroirs déformables de type MEMS pour entraîner un retard du chemin optique) ou par une modulation de l'indice (en utilisant, par exemple, cristal liquide ou nano-PDLC dans le SLM) sur l'un des deux bras ou les deux.

La figure 4a illustre le cas où on effectue une modulation d'indice sur un seul bras. Selon ce mode de réalisation, un premier faisceau incident 430 est imagé sur le déphaseur 43 comprenant une barrette SLM permettant des retards variables. Le faisceau 430 comprend différentes composantes associées à des longueurs d'ondes λi distinctes séparées spatialement. Chacune de ces composantes traverse un élément de la barrette (pixel) du déphaseur 43, affectant cette composante d'une valeur particulière, propre au pixel concerné de la barrette. Ainsi, le retard affectant les composantes du faisceau 430 dépend de l'état du pixel de la barrette, traversé par cette composante et donc de la longueur d'onde multiplexée spatialement. Le faisceau incident déphasé est réfléchi par le miroir 44 et traverse à nouveau le déphaseur pour produire un signal réfléchi 431 comprenant des composantes multiplexées spatialement et dont chacune des longueurs d'onde est affectée d'un déphasage fonction de cette longueur d'onde.

Un deuxième faisceau incident 432 est simplement réfléchi par le miroir 44 et ne subit pas de déphasage en fonction de la longueur d'onde.

La figure 4b illustre le cas où on effectue une modulation d'indice sur deux bras. Dans ce cas, deux faisceaux 435 et 437 incidents sont imagés sur respectivement des déphaseurs 433 et 435 similaires au déphaseur 43 avant d'être réfléchis par un miroir 439 et de traverser à nouveau les déphaseurs 433 et 435. Ainsi, chacune des longueurs d'onde des faisceaux de sortie 436 et 438 est affectée d'un déphasage fonction de cette longueur d'onde.

Selon un mode de réalisation avec deux faisceaux déphasés, la différence avec un interféromètre conventionnel réside dans la matérialisation d'un plan d'interférences intermédiaire (plan de Fourier), rendu possible par un système d'imagerie en espace libre de type 4*f*, et autorisant l'introduction d'un élément dispersif agissant de manière commune et indépendante sur les deux faisceaux (bras), et dont le résultat est de paralléliser l'interféromètre spectralement, opération difficile à obtenir avec un interféromètre conventionnel. L'introduction d'un retard relatif entre les deux faisceaux (associés chacun à un bras) s'opère dans le plan d'imagerie du montage 4*f* où ces deux faisceaux sont séparés et dispersés en fonction de la longueur d'onde (selon les modes de réalisation illustré en regard de la figure 4b) et dans lequel est placé un miroir qui renvoie les deux faisceaux vers l'entrée du système optique, les recombinant à la fois spectralement (par retour inverse) et énergétiquement au niveau de la séparatrice ou du coupleur, avec routage vers l'une des deux voies de sortie de l'interféromètre selon leur déphasage respectif (comme indiqué en regard des figures 2 et 3a à 3c).

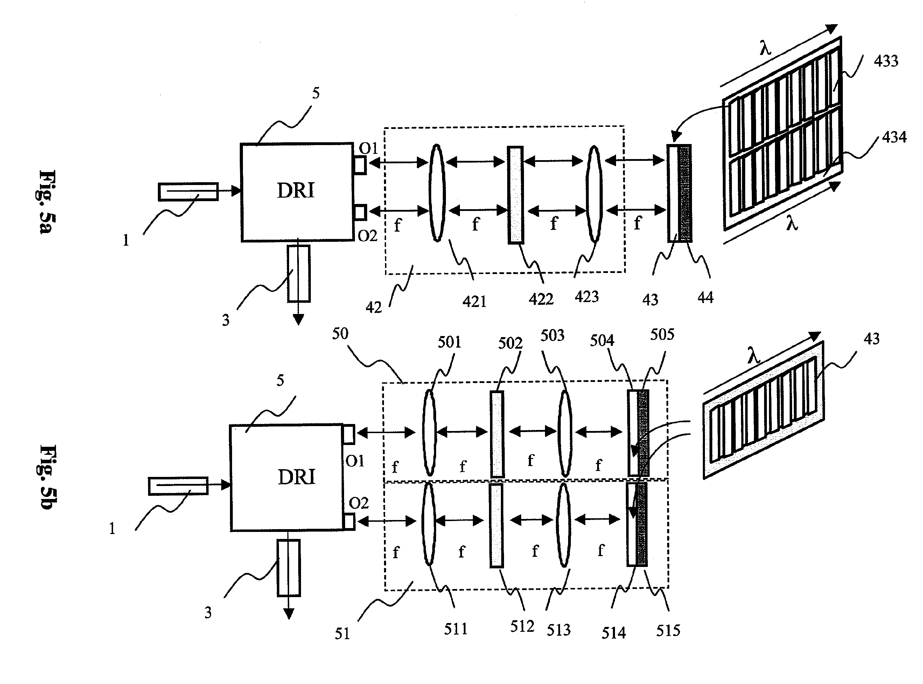

La figure 5a détaille le système 41 présenté en regard de la figure la et ses éléments illustré en regard des figures 2, 3a (ou 3b, 3c) et 4b, et comprenant un montage d'image parallélisé. Le système 41 présente l'avantage de nécessiter un seul imageur multiplexeur/démultiplexeur 42. Par ailleurs, il nécessite deux barrettes 433, 434 juxtaposées (ou quasiment juxtaposées) sur un même substrat (c'est-à-dire avec une partie électronique commune) en étant séparées de quelques dizaines de microns (la longueur des barrettes 433, 434 étant de l'ordre de 1mm).

Selon une variante illustrée en regard de la figure 5b, le système d'égalisation comprend un DRI 5 et deux bras parallèles 50 et 51 comprenant chacun un bloc imageur d'imagerie en espace libre de type 4*f* (un bloc dispersif (502, 512) étant placé dans le plan focal de deux lentilles (paires 501, 503 et 511, 514), et un élément déphaseur (respectivement 504 et 514) accolé à un miroir (respectivement 505 et 515).

Dans le cas où il s'agit uniquement d'un miroir et sous réserve que les chemins optiques sont équivalents, les deux faisceaux reformés dans le plan de sortie sont en phase et toute l'énergie est recombinée dans la fibre d'entrée (aux pertes d'insertion du système près).

En revanche, si on déphase l'un des deux faisceaux par rapport à l'autre dans le plan d'imagerie, on génère un retard à la recombinaison et l'on observe une répartition d'énergie différente sur les deux bras de sortie de l'interféromètre, fonction de ce déphasage.

Selon une variante de l'invention relativement simple à mettre en oeuvre, le système d'égalisation utilise (notamment pour le premier bras) un démultiplexeur classique disposant d'un élément permettant de retarder indépendamment chacune des longueurs d'onde du spectre et de les recombiner. Le second bras de l'interféromètre est constitué d'une ligne à retard qui émule un parcours équivalent sur le spectre non démultiplexé (comme illustré en regard de la figure 4a, il n'est pas nécessaire d'opérer un démultiplexage sur les deux bras.).

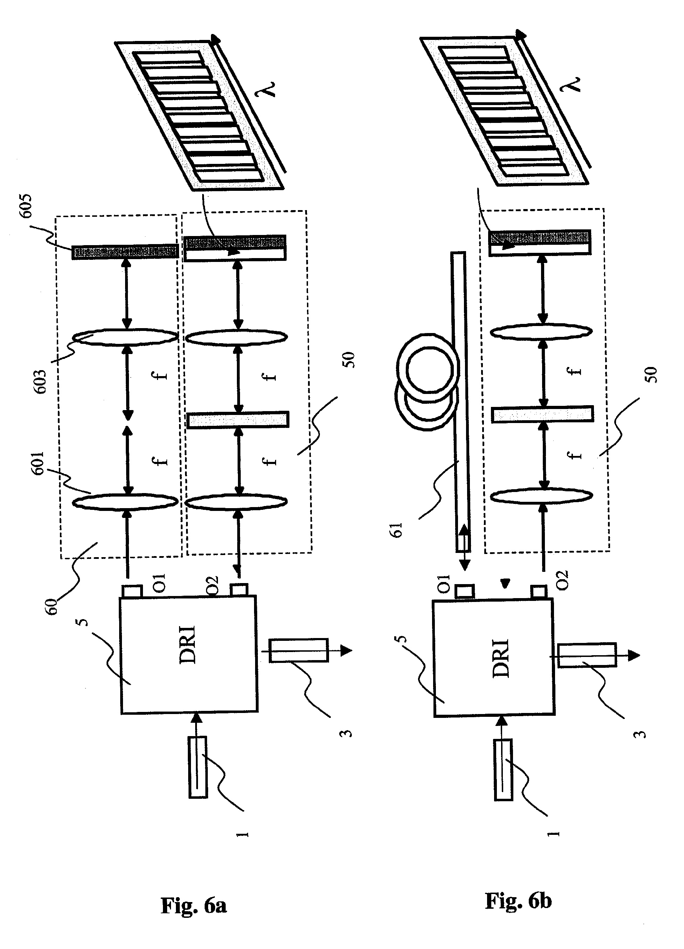

La figure 6a illustre une telle mise en oeuvre et plus précisément un égaliseur comprenant un DRI associé à une fibre d'entrée 1, à une fibre de sortie 3 et à deux entrées/sorties séparant un signal d'entrée sur deux bras 50 et 60 et recombinant le signal renvoyé par ces deux bras 50 et 60. Les éléments similaires aux figures précédentes portent les mêmes références et ne sont donc pas décrits davantage. Le bras 60 est un système d'imagerie 4*f* comprenant deux lentilles 601 et 603 de distance focale *f* et un miroir 605. La première lentille 601 est placée à une distance *f* de la sortie correspondante du DRI 5 ; les deux lentilles 601 et 603 sont séparées d'une distance 2*f*, et le miroir 605 est placée à une distance *f* de la lentille 603. Ainsi, le signal optique parcourt une distance 4*f* dans les deux bras 50 et 60.

Selon une variante, les deux lentilles 601 et 603 ont des distances focales différentes respectivement *f1* et *f2*. La première lentille 601 est placée à une distance *f1* de la sortie correspondante du DRI 5 ; les deux lentilles 601 et 603 sont séparées d'une distance égale à la somme des distances focales *f1* et *f2*, et le miroir 605 est placée à une distance *f2* de la lentille 603. Ainsi, le signal optique parcourt une distance 2x(*f1 +f2)* dans les deux bras 50 et 60.

Selon un mode de réalisation illustré en regard de la figure 6b, on remplace le premier bras 60 par un bras 61 comprenant un tronçon de longueur optique équivalente, soit 4*f* et qui assure donc la même fonction de retard optique équivalent au bras 50.

En d'autres termes, les bras 60 et 61 créent des chemins optiques de longueur équivalente à celle du bras 50.

Selon une variante, le bras de l'égaliseur, comprenant la ligne à retard (bras 60 ou 61 notamment) est doté d'un atténuateur variable supplémentaire, permettant ainsi un équilibrage de la puissance au niveau du coupleur, pour maximiser le taux de réjection.

Selon un autre variante, le bras de l'égaliseur, comprenant la ligne à retard (bras 60 ou 61 notamment) est doté d'une lame compensatrice permettant de corriger le déséquilibre de longueur des bras qui est susceptible de dégrader la transmission des signaux à très haut débit.

Les figures 7a à 7c illustrent un système 4 où le bloc interférométrique 41 est intercalé entre l'élément déphaseur 43 et le système imageur/démultiplexeur 42 tel qu'illustré en regard des figures 1b et 1c.

Bien entendu, le DRI 41 est utilisé d'une manière similaire :
- dans une architecture où il est intercalé entre un imageur/démultiplexeur (cas des figures 1b et 1c) et l'élément déphaseur 43, le DRI 41 agit sur un faisceau optique démultiplexé spatialement en longueurs d'onde et renvoie un faisceau optique démultiplexé en retour soit vers le système imageur/démultiplexeur 42 d'entrée (figure 1b) soit vers un second système imageur/démultiplexeur de sortie (figure 1c) ; et
- dans une architecture où il se situe entre l'entrée du système et l'imageur, le DRI 41 agit sur un faisceau optique non multiplexé spatialement et l'imageur traite deux faisceaux en entrée et en sortie (figure 1a).

Seule la nature des faisceaux traités par le DRI est associée à l'architecture du système optique.

Selon cette variante, le bloc interférométrique 41 opère directement sur les signaux démultiplexés, juste avant de traverser la barrette ou (les barrettes) de déphaseurs variables 43. Ce bloc est simple à réaliser. Il peut s'agir, par exemple, d'une lame séparatrice (semi transparente), en l'occurrence pour des raisons pratiques un cube séparateur, placé en contact avec le ou (les) modulateur(s) spatial suivant le principe de la figure 7a. Ainsi, cette solution présente l'intérêt de permettre d'intégrer le bloc interférométrique au niveau de l'élément déphaseur directement, et donc de limiter les sources de perturbations mécaniques et thermiques de la partie interférométrique.

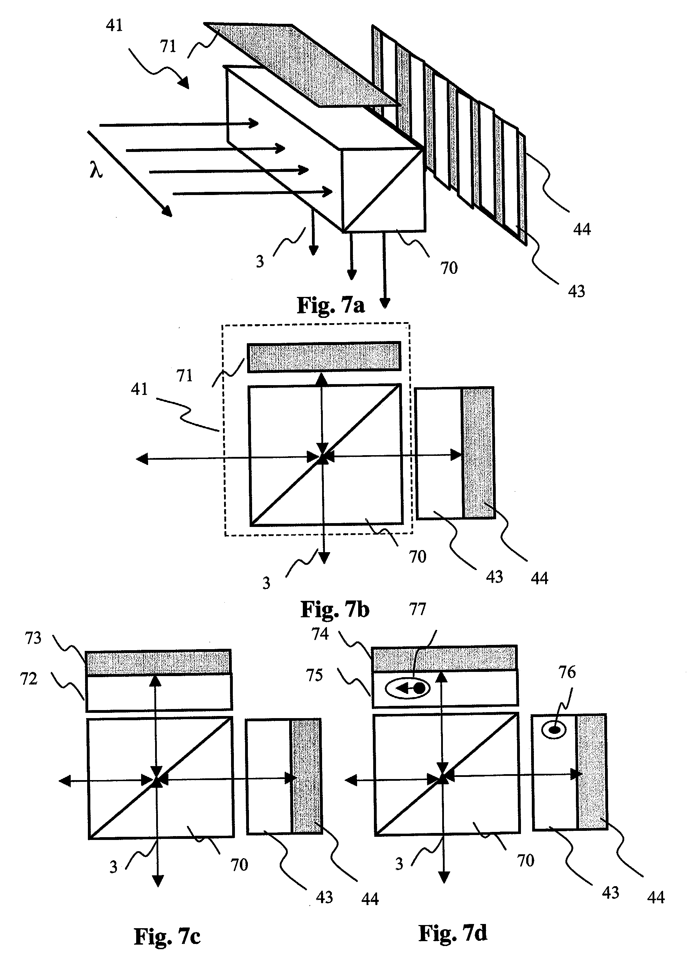

Comme représenté en regard de la figure 7b, une partie du faisceau éclaire le modulateur 43 en réflexion, tandis que l'autre est réfléchie par le miroir arrière 71 de la lame semi-transparente.

Selon des variantes illustrées en regard des figures 7c et 7d, le miroir arrière 71 est remplacé par un second modulateur (respectivement 72 et 75 associé à un miroir 73 et 74), ce qui permet un meilleur équilibrage des bras (intensité et phase, compensation des défauts éventuels du modulateur). La recombinaison se fait par principe du retour inverse soit suivant l'axe d'incidence du spectre chromatique soit perpendiculairement à celui-ci.

Selon la variante de la figure 7c, les déphaseurs 72 et 43 sont identiques et isotropes (il s'agit par exemple de dispositifs à retards variables de type MEMS, ou à nano-PDLC).

En revanche, selon la variante de la figure 7d, les déphaseurs 75 et 43 sont identiques et anisotropes avec des axes propres orientés perpendiculairement (respectivement suivant des directions 77 et 76). Chacune des composantes de polarisation est modulée indépendamment par l'un ou l'autre des déphaseurs de sorte à créer, à la recombinaison, le même déphasage entre les deux bras de l'interféromètre. Les déphaseurs 75 et 43 sont, par exemple, obtenus au moyen d'un cristal liquide nématique peigné suivant les deux directions orthogonales 77 et 76.

La figure 8 illustre schématiquement le principe interférométrique lorsqu'on utilise un DRI de type coupleur à fibre ou à guide tel que le coupleur 414 présenté en regard de la figure 3c utilisé dans un montage tel qu'illustré en figure la (les moyens d'imagerie et le miroir n'étant représentés). La configuration de type Mach-Zehnder comprend deux coupleurs 81 et 82 similaires au coupleur 415 présenté en regard de la figure 3c. Le premier coupleur 81 sert à répartir l'intensité dans les deux bras (généralement 50% dans chacun des bras 81 et 82). On injecte le signal sur une des voies d'entrée 80 et 87. Ensuite, un élément mécanique ou électro-optique 88 et 89 (correspondant aux déphaseurs 43) modifie la phase entre les deux guides (ici, l'élément programmable placé dans le plan d'imagerie) dans respectivement chacun des bras séparant les coupleurs 81 et 82. Enfin, le deuxième coupleur 82 permet de récupérer et de combiner le signal dans l'un des deux guides 85 ou 86, ou fibres de sortie.

Selon le déphasage Δϕ entre les bras 81 et 82, on active une sortie correspondant à l'une des entrées/sorties et la fonction d'intensité I1 et I2 est donnée sur chaque voie respectivement 85 et 86 par les relations:
- I₁ = I₀ sin² Δϕ /2 (sortie 86); et
- I₂ = I₀ cos² Δϕ /2 (sortie 85); (Δϕ représentant la différence de phase ϕ1-ϕ2 entre les signauxpénétrant dans le coupleur 84);
où Iₒ représente l'intensité du signal incident (les pertes optiques étant négligées).

Ainsi, si l'une des voies doit être identifiée comme la voie de sortie et la seconde comme la voie d'entrée du dispositif utilisé tel que cela est le cas ici dans un montage en réflexion, un isolateur doit être introduit sur la voie d'entrée pour éliminer la puissance qui peut y être recouplée. Ce type de solution présente l'avantage de matérialiser une entrée et une sortie du DCE (par rapport aux réalisations les plus courantes où la fibre d'entrée sert comme fibre de sortie), soit remplacer un circulateur par un isolateur.

Les modes de réalisation à base de coupleur présentent l'avantage d'être compacts, robustes et simples à mettre en oeuvre. En revanche, il est nécessaire disposer d'une ressource suffisante au niveau du déphasage pour équilibrer les chemins optiques en aval (plan d'imagerie par exemple) ou d'introduire un élément de compensation sur l'un des deux bras pour équilibrer les bras du coupleur.

Bien entendu, l'invention n'est pas limitée aux exemples de réalisation mentionnés ci-dessus.

En particulier, l'homme du métier pourra apporter toute variante dans la géométrie et le mode de réalisations des DRI, déphaseurs et blocs imageurs démultiplexeur.

Les DRI notamment sont, selon l'invention, mise en oeuvre sous la forme de tout système qui effectue une séparation et une recombinaison par retour inverse (la séparatrice du DRI est utilisée comme recombineur par le faisceau rétropropagé), en étant associé à un multiplexeur/démultiplexeur.

Le système optique selon l'invention peut être mis en oeuvre sous forme monolithique ou modulaire. La structure modulaire, par exemple comprenant trois blocs (DRI, imageur, et déphaseur) permet l'utilisateur de plusieurs technologies. Elle permet en outre une adaptation simple aux caractéristiques désirées (notamment une adaptation au nombre de canaux, à la résolution, à la bande passante). La structure monolithique présente généralement un coût moindre et un plus grande robustesse.

L'invention présente de nombreuses applications correspondant, en particulier, aux applications de toute technique permettant une réjection de bandes spectrales de manière variable en largeur de bande et en atténuation, ou encore une sélection de bandes spectrales (routage de bande spectrale notamment). Ainsi, des applications de l'invention sont notamment :
- le blocage de longueurs d'onde ou de bandes spectrales, et les OADM (permettant une extraction et/ou une insertion de longueur d'onde) reconfigurables destinés notamment à des dispositifs de communications optiques ;
- les filtres sélectables de longueur d'onde ou en bande de longueurs d'ondes utilisés en particulier dans le domaine de la spectrocopie.

## Revendications

1. Système interférométrique (2, 4, 5) de sélection de composantes spectrales d'un faisceau optique incident en fonction de leur longueur d'onde,
**caractérisé en ce que** le système comprend
- des moyens de transformation (42) dudit faisceau optique incident en deux faisceaux démultiplexés spatialement;
- des moyens de déphasage (43) d'au moins un desdits faisceaux démultiplexés spatialement, ledit déphasage s'appliquant spatialement de sorte à produire deux faisceaux dits déphasés, au moins une de leurs composantes étant déphasée en fonction de sa longueur d'onde;
- des moyens de recombinaison (44, 42) desdits faisceaux déphasés adaptés à produire un premier et un second faisceaux de sortie, chacun desdits faisceaux de sortie étant multiplexé en longueur d'onde et comprenant des composantes desdits faisceaux déphasés, sélectionnées en fonction respectivement d'un premier et d'un second déphasage.

2. Système selon la revendication 1, **caractérisé en ce que** le premier déphasage est sensiblement égal à zéro modulo 2π radians, les composantes desdits faisceaux déphasés étant sensiblement en phase et **en ce que** le deuxième déphasage est sensiblement égal à π modulo 2π radians, les composantes desdits faisceaux déphasés étant sensiblement en opposition de phase.

3. Système selon l'une quelconque des revendications 1 et 2, **caractérisé en ce que** lesdits moyens de transformation dudit faisceau optique incident comprennent des moyens (42) d'imagerie et de démultiplexage spatial d'au moins un faisceau optique et des moyens de séparation (41).

4. Système (2) selon la revendication 3, **caractérisé en ce que** lesdits moyens d'imagerie et de démultiplexage spatial sont placés sur le trajet optique compris entre lesdits moyens de séparation et lesdits moyens de déphasage.

5. Système (4, 5) selon la revendication 3, **caractérisé en ce que** lesdits moyens de séparation sont placés sur le trajet optique compris entre lesdits moyens d'imagerie et de démultiplexage spatial et lesdits moyens de déphasage.

6. Système selon l'une quelconque des revendications 3 à 5, **caractérisé en ce que** lesdits moyens d'imagerie sont adaptés à une propagation d'un signal optique en espace libre.

7. Système selon la revendication 6, **caractérisé en ce que** lesdits moyens d'imagerie comprennent au moins une première lentille (421) possédant une première distance focale et une seconde lentille (422) possédant une seconde distance focale, et **en ce que** :
- la première lentille est placée à ladite première distance focale de l'entrée desdits moyens d'imagerie ;
- ladite seconde lentille est placée à ladite seconde distance focale de la sortie desdits moyens d'imagerie ; et
- lesdites première et seconde lentilles sont séparées d'une distance correspondant à la somme desdites première et seconde distances focales.

8. Système selon la revendication 7, **caractérisé en ce que** lesdits moyens de démultiplexage spatial (422) sont placés dans un plan de Fourier desdites première et seconde lentilles.

9. Système selon l'une quelconque des revendications 1 et 2, **caractérisé en ce que** lesdits moyens de transformation dudit faisceau optique incident comprennent un démultiplexeur guidé en optique planaire, adapté au démultiplexage d'au moins un faisceau optique, et des moyens de séparation (415).

10. Système selon l'une quelconque des revendications 3 à 9, **caractérisé en ce que** lesdits moyens de déphasage sont placés dans un plan d'imagerie desdits moyens d'imagerie de sorte à permettre un déphasage en fonction de chacune des composantes multiplexées spatialement.

11. Système selon la revendication 10, **caractérisé en ce que** lesdits moyens de déphasage comprennent des moyens de déphasage programmables (43,433,434).

12. Système selon l'une quelconque des revendications 10 et 11, **caractérisé en ce que** lesdits moyens de déphasage programmables sont adaptés à retarder de manière variable un faisceau optique et appartiennent au groupe comprenant :
- les miroirs déformables;
- les micro-miroirs ; et
- les matériaux optiques permettant une modulation de l'indice de réfraction.

13. Système selon l'une quelconque des revendications 11 et 12, **caractérisé en ce que** lesdits moyens de déphasage comprennent des moyens de déphasage non programmables (60, 61).

14. Système selon l'une quelconque des revendications 10 à 13, **caractérisé en ce que** lesdits moyens de déphasage sont associés à au moins un miroir (44).

15. Système selon l'une quelconque des revendications 3 à 14, **caractérisé en ce que** lesdits moyens de démultiplexage spatial appartiennent au groupe comprenant :
- les prismes ;
- les réseaux holographiques ; et
- les réseaux blazés.

16. Système selon l'une quelconque des revendications 3 à 15, **caractérisé en ce que** lesdits moyens de séparation comprennent une séparatrice (411, 4165).

17. Système selon l'une quelconque des revendications 3 à 16, **caractérisé en ce que** lesdits moyens de séparation comprennent un coupleur (415).

18. Système selon l'une quelconque des revendications 1 à 17, **caractérisé en ce que** lesdits moyens de recombinaison et lesdits moyens de transformation possèdent au moins une partie commune (411, 4165).

19. Système selon l'une quelconque des revendications 1 à 18, **caractérisé en en ce qu**'il comprend des moyens appartenant au groupe comprenant :
- les moyens d'égalisation optique ;
- les bloqueurs de longueur d'onde ;
- les sélecteurs de bandes spectrales ; et
- les moyens de routage optique.

20. Système selon l'une quelconque des revendications 1 à 18, **caractérisé en en ce qu'**il comprend des moyens de mesure de spectre optique dudit faisceau optique incident.

21. Système selon l'une quelconque des revendications 1 à 20, **caractérisé en ce qu'**il forme un composant monolithique.

22. Système selon l'une quelconque des revendications 1 à 20, **caractérisé en ce que** lesdits moyens de transformation et lesdits moyens de déphasage sont séparés.
